(19) Europäisches Patentamt
European Patent Office
Office européen des brevets

(11) Numéro de publication : **0 239 706**
**B1**

(12) # FASCICULE DE BREVET EUROPÉEN

(45) Date de publication du fascicule du brevet : **03.01.90**

(51) Int. Cl.$^5$ : **C 08 G 18/08**, H 01 B 3/30, C 08 K 3/34

(21) Numéro de dépôt : **86402042.5**

(22) Date de dépôt : **18.09.86**

(54) **Perfectionnements pour polyurethanes à deux composants.**

(30) Priorité : **20.09.85 FR 8513951**

(43) Date de publication de la demande : **07.10.87 Bulletin 87/41**

(45) Mention de la délivrance du brevet : **03.01.90 Bulletin 90/01**

(84) Etats contractants désignés : **BE CH DE GB IT LI LU NL SE**

(56) Documents cités :
**DE-A- 1 928 129**
**FR-A- 1 321 178**
**FR-A- 2 001 359**

(73) Titulaire : **CECA S.A.**
**22, Place des Vosges**
**F-92400 Courbevoie (FR)**

(72) Inventeur : **Vandermeersch, Jean**
**45, rue Edouard Vaillant**
**F-93100 Montreuil (FR)**
Inventeur : **Durand, Guy**
**118, avenue Jean-Jaurès**
**F-75019 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

EP 0 239 706 B1

**Description**

L'invention concerne des formulations de résines polyuréthanes non cellulaires, perfectionnées quant à leur aspect, leurs propriétés mécaniques et à la parfaite conservation au stockage de leurs précurseurs.

Les polyuréthanes sont des composés macromoléculaires qui résultent de la réaction de polyisocyanates avec des composés polyhydroxylés. Dans la pratique, la réaction s'obtient à température ambiante par simple mélange de deux composants contenant chacun l'un des deux réactifs, et dont l'un au moins est liquide à la température ambiante. Le mélange reste liquide, ou tout au moins fluide, pendant un certain temps qui permet sa mise en œuvre. Cette période qui précède le durcissement du produit est communément dénommée durée de vie en pot.

L'eau, comme tout dérivé hydroxylé, réagit sur les isocyanates. La réaction de l'eau sur l'isocyanate provoque un dégagement de gaz carbonique, et en cas d'introduction involontaire d'eau dans le mélange polyisocyanate/polyol, par exemple du fait de l'emploi d'un polyol non anhydre, la réaction concurrente de l'eau crée dans le produit final des bulles gazeuses qui nuisent à l'aspect et aux propriétés mécaniques du produit durci.

Comme on sait par ailleurs améliorer l'aspect général et les propriétés mécaniques de polyuréthanes, par incorporation de charges minérales inertes vis-à-vis des réactifs et sans action sur leur polycondensation, l'idée a été exploitée d'employer comme charge additionnelle au composant contenant le réactif hydroxylé des déshydratants et plus particulièrement des zéolites.

Ce type de charge s'avère avantageux pour toute application du polyuréthane en couche mince, peintures, vernis, revêtements de sols et de murs, en ce qu'il neutralise la diffusion de l'humidité ambiante dans le polyuréthane en cours de polymérisation. On évite ainsi un durcissement différentiel de la couche supérieure, source de craquelures du produit final.

On le recherche également pour l'application des polyuréthanes en revêtements et isolations électriques (par exemple transformateurs, boîtes de connexion), application dans laquelle les microbulles, piqûres et craquelures nuisent à la qualité de l'isolation.

Cependant, les zéolites couramment utilisées en déshydration, telles les zéolites 4 A, 5 A, 10 A, ont la fâcheuse propriété d'adsorber l'azote de l'air à température ambiante, et la désorption de cet azote du fait de l'exothermicité de la réaction de polymérisation recrée des microbulles indésirables.

L'idée vient dès lors à l'esprit d'utiliser comme charges déshydratantes des zéolites dites 3 A, qui retiennent l'eau à l'exclusion des gaz de l'air.

On connaît depuis longtemps de telles zéolites à faibles ouverture de pore, et on sait les obtenir à partir de la zéolite sodique 4 A par échange total ou partiel des cations sodium par des cations potassium.

On a cependant constaté qu'une telle zéolite 3 A ne constituait pas une charge réellement inerte vis-à-vis du système polymérisable, et qu'après un stockage prolongé du composant hydroxylé (on l'appelle généralement en terme de métier « résine ») dans sa formulation polyol + zéolite 3 A, il arrive que la durée de vie en pot du système résine/polyisocyanate se trouve considérablement diminuée au point d'être trop courte pour une application correcte du polyuréthane.

La demanderesse a trouvé que l'on pouvait réaliser des polyuréthanes à deux composants qui soient exempts d'inclusion gazeuse, et dont la durée de vie en pot soit peu sensible à l'âge du constituant hydroxylé en utilisant, et c'est en cela que réside l'invention, des charges déshydratantes constituées de zéolites mixtes sodiques, potassiques et calciques.

Les zéolites mixtes selon l'invention répondent, sous leur forme anhydre, à une formule générale

$$a\ Na_2O\ .\ b\ \ K_2O\ .\ c\ \ MO\ .\ Al_2O_3\ .\ (1{,}85 \pm 0{,}50)\ SiO_2$$

où $b = 0{,}3 \pm 0{,}2$,

$c = 0{,}3 \pm 0{,}2$,

où a est tel que

$$a + b + c = 1\ ;$$

où M est un métal divalent alcalinoterreux, et plus précisément le calcium ou le magnésium.

Les zéolites préférées répondent, pour leur forme anhydre, à la formule

$$(0{,}35 \pm 0{,}20)\ Na_2O\ .\ (0{,}30 \pm 0{,}10)\ K_2O\ .\ (0{,}30 \pm 0{,}15)\ CaO\ .\ Al_2O_3\ .\ (1{,}85 \pm 0{,}50)\ SiO_2$$

L'art antérieur, et plus précisément FR-A 2001 359, enseigne l'existence de telles substances : la mention de leur propriété de résistance à la dégradation hydrothermique ne laisse en rien présumer de l'application qui peut leur en être donnée pour la réalisation de polyuréthanes de haute qualité.

Leur préparation peut être réalisée, selon des méthodes connues, par échange, simultané ou

successif, d'une partie des cations sodium d'une zéolite sodique du type A, produit aujourd'hui commercial, dont la formule générale est

$$(1,0 \pm 0,2)\ Na_2O\ .\ Al_2O_3\ .\ (1,85 \pm 0,5)\ SiO_2\ .\ yH_2O,$$

où y dépend de l'état d'hydratation de la zéolite et a une valeur comprise entre 0 et 6, par les cations calcium et potassium, les solutions d'échange étant constituées très simplement de solutions aqueuses de sels solubles de ces métaux : la forme utile du produit est la forme déshydratée par chauffage à des températures de 250 à 400 °C maximum.

Comme on l'a évoqué plus haut, le polyuréthane se met en œuvre par mélange extemporané de deux composants ; l'un contient le réactif polyisocyanate et est dénommé couramment durcisseur ; l'autre renferme le réactif polyhydroxylé et est dénommé couramment résine, terme sous lequel on le désignera ci-après.

C'est la résine qui renferme les charges et pigments ; on assure la déshydratation permanente grâce à son contenu de zéolite mixte.

Les quantités utilisées de zéolite dépendent de la teneur en eau des composants de la résine, et il en sera tenu compte lors de sa préparation sur la base d'une capacité utile de fixation de 0,005 à 0,15 g d'eau par gramme de zéolite, valeur à adapter en fonction des conditions de stockage et de manipulation.

Elles se situent couramment dans une zone de 2 à 20 % en poids de la résine.

Les exemples qui suivent feront mieux comprendre l'invention. Ils ne sont pas limitatifs.

## Exemple I

Préparation d'une zéolite mixte.

On délite 200 g de zéolite 4 A anhydre, de granulométrie inférieure à 20 micromètres (par exemple de la Siliporite NK10 commercialisée par CECA S.A.).

On prépare par ailleurs une solution de 150 g de chlorure de potassium dans 500 ml d'eau de ville, dans laquelle on dissout 36 g de chlorure de calcium bihydraté.

On verse sous agitation, cette solution dans la barbotine de zéolite, et on maintient l'agitation pendant une heure à température ambiante.

On sépare le précipité par filtration. On lave le gâteau jusqu'à élimination de toute trace de chlorure, on le sèche à 120-150 °C pendant une à deux heures, on l'active par traitement à 350 °C pour en éliminer l'eau résiduelle.

On obtient ainsi une poudre blanche, dont l'adsorption d'azote est négligeable, et qui se conserve indéfiniment en récipients hermétiquement clos.

La composition de cette zéolite est, sous sa forme anhydre :

$$0,34\ Na_2O\ .\ 0,38\ K_2O\ .\ 0,28\ CaO\ .\ Al_2O_3\ .\ 2\ SiO_2$$

## Exemple II

Préparation et comportement d'une résine.

a) Résine

On mélange 50 g de polyether (Desmophen ® 550, Bayer) et 50 g d'huile de ricin.

On ajoute au mélange sous agitation puissante :

15 g de dioxyde de titane
100 g de carbonate de calcium
15 g de zéolite selon l'exemple 1.

On poursuit l'agitation pendant environ vingt minutes ; le mélange homogène obtenu constitue la résine.

b) Polyuréthane

A la totalité de la résine préparée ci-dessus, on ajoute sous agitation douce,
95 g de diphénylméthanediisocyanate.

On peut suivre le durcissement du mélange par mesure de la viscosité Brookfield. On convient de nommer temps de vie en pot (TV) la durée exprimée en minutes, qui sépare le moment de l'introduction du polyisocyanate de celui où la viscosité atteint 100 Pascals-secondes.

On répète la même expérience sur une résine vieillie. Le vieillissement simulé s'obtient en étuvant la résine pendant 24 heures à 40 °C (on estime qu'une telle épreuve correspond à un vieillissement spontané de la résine d'une année dans des conditions moyennes de stockage).

On obtient ainsi :

— avec la résine neuve, un TV de 50 minutes
— avec la résine vieillie, un TV de 36 minutes.

Exemple III (contre exemple)

On répète les essais de vie de pot conformément à l'exemple II, mais en utilisant soit une zéolite sodique ordinaire 4 A (dont l'adsorption d'azote, mesurée à 20 °C et sous pression atmosphérique normale à la balance de Mac Bain, est d'environ 55 ml/g), soit une zéolite dite 3 A obtenue par simple échange potassique ordinaire (on peut obtenir, le cas échéant une telle zéolite en reproduisant le mode opératoire de l'exemple, I la différence résidant dans l'emploi d'une solution d'échange constituée de 150 g de chlorure de potassium dans 500 ml d'eau, à l'exclusion de chlorure de calcium ; cette zéolite 3 A a une composition représentable sous sa forme anhydre par :

$$0,5\ Na_2O\ .\ 0,5\ K_2O\ .\ Al_2O_3\ .\ 2\ SiO_2$$

Les résultats de durée de vie en pot, exprimés en minutes sont les suivants :

| Zéolite | TV résine initiale | TV résine vieillie | Observation |
|---|---|---|---|
| 4 A (sodique) | 41 | 35 | Formation d'écume en surface |
| 3 A (Sodique/ Potassique) | 53 | 13 | pas d'écume en surface |
| Mixte selon l'exemple I | 50 | 36 | pas d'écume en surface |

Exemple IV

On fabrique diverses zéolites selon l'invention en suivant le processus décrit dans l'exemple I, mais avec des solutions d'échanges différentes.

Les résultats de durée de vie en pot, exprimés en minutes, sont pour ces zéolites selon l'invention, les suivants :

| Produit | Solution d'échange pour 500ml d'eau | | durée de vie | |
|---|---|---|---|---|
| | KCl | $CaCl_2,2H_2O$ | résine neuve | résine vieillie |
| IV/a | 90 | 45 | 60 | 28 |
| IV/b | 250 | 10 | 57 | 24 |
| IV/c | 90 | 100 | 40 | 25 |

**Revendications**

1. Méthode de préparation de polyuréthanes exempts d'inclusion gazeuse, par mélange de deux composants séparément conservables sans variation importante de réactivité, le composant renfermant le réactif hydroxylé contenant un déshydratant constitué par une zéolite, caractérisée en ce que la zéolite, sous sa forme anhydre, répond à la formule générale :

$$a\ Na_2O\ .\ b\ K_2O\ .\ c\ MO\ .\ Al_2O_3\ .\ m\ SiO_2$$

où b est un nombre compris entre 0,1 et 0,5,
c est un nombre compris entre 0,1 et 0,5 ;
où a est un nombre tel que l'on ait

$$a + b + c = 1\ ;$$

où m est un nombre compris entre 1,35 et 2,35 ;
où M représente le calcium ou le magnésium.

2. Méthode de préparation de polyuréthanes selon la revendication 1, caractérisée en ce que le déshydratant zéolitique sous sa forme anhydre, répond à la formule :

$$a\ Na_2O\ .\ b\ K_2O\ .\ c\ CaO\ .\ Al_2O_3\ .\ m\ SiO_2$$

où b est un nombre compris entre 0,20 et 0,40,
c est un nombre compris entre 0,15 et 0,45 ;
où a est un nombre tel que l'on ait

$$a + b + c = 1\ ;$$

où m est un nombre compris entre 1,35 et 2,35.

3. Méthode de préparation de polyuréthanes selon les revendications 1 ou 2, caractérisée en ce que le déshydratant zéolitique représente de 2 à 20 % du poids du composant hydroxylé.

4. Composant stable au stockage, pour polyuréthanes exempts d'inclusion gazeuse, constitué d'au moins un réactif organique polyhydroxylé et une zéolite, caractérisé en ce que la zéolite, sous sa forme anhydre, répond à la formule générale :

$$a\ Na_2O\ .\ b\ K_2O\ .\ c\ MO\ .\ Al_2O_3\ .\ m\ SiO_2$$

où b est un nombre compris entre 0,1 et 0,5,
c est un nombre compris entre 0,1 et 0,5 ;
où a est un nombre tel que l'on ait

$$a + b + c = 1\ ;$$

où m est un nombre compris entre 1,35 et 2,35 ;
où M représente le calcium ou le magnésium.

5. Composant pour polyuréthane selon la revendication 4, caractérisé en ce que le déshydratant est une zéolite répondant sous sa forme anhydre à la formule

$$a\ Na_2O\ .\ b\ K_2O\ .\ c\ CaO\ .\ Al_2O_3\ .\ m\ SiO_2$$

où b est un nombre compris entre 0,20 et 0,40,
c est un nombre compris entre 0,15 et 0,45 ;
où a est un nombre tel que l'on ait

$$a + b + c = 1\ ;$$

où m est un nombre compris entre 1,35 et 2,35.

6. Composant pour polyuréthane selon les revendication 4 ou 5, caractérisé en ce que le déshydratant zéolitique représente 2 à 20 % du poids du composant.

**Claims**

1. Method of preparation of polyurethanes free from gaseous inclusion, by mixing two components capable of being stored separately without major change in reactivity, the component including the hydroxylated reactant containing a dehydrating agent consisting of a zeolite, characterized in that the

zeolite, in its anhydrous form, corresponds to the general formula :

$$a\ Na_2O\ .\ b\ K_2O\ .\ c\ MO\ .\ Al_2O_3\ .\ m\ SiO_2$$

where b is a number between 0.1 and 0.5,
c is a number between 0.1 and 0.5 ;
where a is a number such that

$$a + b + c = 1 ;$$

where m is a number between 1.35 and 2.35 ;
where M denotes calcium or magnesium.

2. Method of preparation of polyurethanes according to Claim 1, characterized in that the zeolitic dehydrating agent in its anhydrous form corresponds to the formula :

$$a\ Na_2O\ .\ b\ K_2O\ .\ c\ CaO\ .\ Al_2O_3\ .\ m\ SiO_2$$

where b is a number between 0.20 and 0.40,
c is a number between 0.15 and 0.45 ;
where a is a number such that

$$a + b + c = 1 ;$$

where m is a number between 1.35 and 2.35.

3. Method of preparation of polyurethanes according to Claims 1 or 2, characterized in that the zeolitic dehydrating agent represents from 2 to 20 % of the weight of the hydroxylated component.

4. Storage-stable component, for polyurethanes free from gaseous inclusion, consisting of at least one polyhydroxylated organic reactant and a zeolite, characterized in that the zeolite, in its anhydrous form, corresponds to the general formula :

$$a\ Na_2O\ .\ b\ K_2O\ .\ c\ MO\ .\ Al_2O_3\ .\ m\ SiO_2$$

where b is a number between 0.1 and 0.5,
c is a number between 0.1 and 0.5 ;
where a is a number such that

$$a + b + c = 1 ;$$

where m is a number between 1.35 and 2.35 ;
where M denotes calcium or magnesium.

5. Component for polyurethane according to Claim 4, characterized in that the dehydrating agent is a zeolite corresponding in its anhydrous form to the formula

$$a\ Na_2O\ .\ b\ K_2O\ .\ c\ CaO\ .\ Al_2O_3\ .\ m\ SiO_2$$

where b is a number between 0.20 and 0.40,
c is a number between 0.15 and 0.45 ;
where a is a number such that

$$a + b + c = 1 ;$$

where m is a number between 1.35 and 2.35.

6. Component for polyurethane according to Claim 4 or 5, characterized in that the zeolitic dehydrating agent represents 2 to 20 % of the weight of the component.

**Patentansprüche**

1. Verfahren zur Herstellung von Polyurethanen frei von gasförmigen Einschlüssen durch Mischen zweier Komponenten, die ohne wesentliche Veränderung der Reaktivität getrennt aufbewahrbar sind, wobei die das hydroxylierte Reagenz enthaltende Komponente ein Dehydratisierungsmittel enthält, das aus einem Zeolith besteht, dadurch gekennzeichnet, daß der Zeolith in seiner wasserfreien Form der allgemeinen Formel

$$a\ Na_2O\ .\ b\ K_2O\ .\ c\ MO\ .\ Al_2O_3\ .\ m\ SiO_2$$

entspricht, in der
b eine Zahl zwischen 0,1 und 0,5 ist,
c eine Zahl zwischen 0,1 und 0,5 ist,
in der
a eine Zahl ist, so daß

$$a + b + c = 1$$ ergibt,

in der
m eine ganze Zahl zwischen 1,35 und 2,35 ist,
und in der M Calcium oder Magnesium darstellt.

2. Verfahren zur Herstellung von Polyurethanen nach Anspruch 1, dadurch gekennzeichnet, daß das zeolithische Dehydratisierungsmittel in wasserfreier Form der Formel :

$$a\ Na_2O\ .\ b\ K_2O\ .\ c\ CaO\ .\ Al_2O_3\ .\ m\ SiO_2$$

entspricht in der
b eine Zahl zwischen 0,20 und 0,40 ist,
c eine Zahl zwischen 0,15 und 0,45 ist,
in der
a eine Zahl ist, so daß

$$a + b + c = 1$$ ergibt,

und in der
m eine Zahl zwischen 1,35 und 2,35 ist.

3. Verfahren zur Herstellung von Polyurethanen nach den Ansprüchen 1 oder 2, dadurch gekennzeichnet, daß das zeolithische Dehydratisierungsmittel 2 bis 20 Gewichtsprozent der hydroxylierten Komponente ausmacht.

4. Lagerstabile Komponente für Polyurethane frei von gasförmigen Einschlüssen, bestehend aus wenigstens einem polyhydroxylierten organischen Reagenz und einem Zeolith, dadurch gekennzeichnet, daß der Zeolith in seiner wasserfreien Form der allgemeinen Formel :

$$a\ Na_2O\ .\ b\ K_2O\ .\ c\ MO\ .\ Al_2O_3\ .\ m\ SiO_2$$

entspricht, in der
b eine Zahl zwischen 0,1 und 0,5 ist,
c eine Zahl zwischen 0,1 und 0,5 ist,
in der
a eine Zahl ist, so daß

$$a + b + c = 1$$ ergibt,

in der
m eine Zahl zwischen 1,35 und 2.35 ist,
und in der
M Calcium oder Magnesium darstellt.

5. Komponente für Polyurethane nach Anspruch 4, dadurch gekennzeichnet, daß das Dehydratisierungsmittel ein Zeolith ist, der in seiner wasserfreien Form der Formel

$$a\ Na_2O\ .\ b\ K_2O\ .\ c\ CaO\ .\ Al_2O_3\ .\ m\ SiO_2$$

entspricht, in der
b eine Zahl zwischen 0,20 und 0,40 ist,
c eine Zahl zwischen 0,15 und 0,45 ist,
in der
a eine Zahl ist, so daß

$$a + b + c = 1$$ ergibt,

und in der
m eine Zahl zwischen 1,35 und 2,35 ist.

6. Komponente für Polyurethane nach den Ansprüchen 4 oder 5, dadurch gekennzeichnet, daß das zeolithische Dehydratisierungsmittel 2 bis 20 Gewichtsprozent der Komponente ausmacht.